# EUROPEAN PATENT APPLICATION

(11) **EP 2 787 718 A1**
(43) Date of publication of application: **08.10.2014**
(21) Application number: 12850954.4
(22) Date of filing: 27.11.2012
(51) Int. Cl.: H04M 3/56, G06F 13/00, H04L 12/18

(54) **VOICE LINK SYSTEM**

(30) Priority: 27.11.2011 JP 2011258374
(71) Applicant: Synergy Drive Inc., Tokyo 171-0021 (JP)
(72) Inventor: ITAKURA, Yuichiro, Tokyo 1710021 (JP)
(74) Representative: Casalonga
(86) International application number: PCT/JP2012/007607
(87) International publication number: WO 2013/077000

(57) **Abstract**

Provided is an audio version social network service system specialized for voice, through which conversations can be enjoyed in spaces on the Web. In the system, a plurality of client terminals and at least one server are connected over a network. The server sorts voice data received from virtual room attribute information means and client terminals into each of a number of virtual rooms, associating the audio data of a given virtual room with the virtual room, and delivering the data to all client terminals that have selected the virtual room in question.

## Description

### [Technical Field]

The present invention relates to technology of a voice-based social network service system (hereinafter, referred to as a voice link system) via a network such as the Internet.

### [Background Art]

In general, in terms of ability of persuading a person and ability of conveying accurate nuances of meaning, voice is by far superior to text. Therefore, conventional text-based social media are limited in the above described ability. Accordingly, there is demand for web applications capable of fully making use of the ability that voices have.

A conventional voice-based conference call system is equipped with a network which connects a plurality of communication terminals to each other, by which the communication terminals are able to exchange information via calling and other communication events. The Internet is known as a representative network suitable for the above described data transmission. With the Internet, protocol used for transmitting voice data is called Voice over IP (VoIP). VoIP is to carry out routing of voice communication via a network which is based on the Internet or IP (the Internet Protocol).

In the case of a conventional conference call system, where at least two units of client terminals will attempt to make conference calls, a voice data signal of each of the client terminals is transmitted to a server and the server synthesizes the voice data signals transmitted from these client terminals. The thus synthesized voice data signals are transmitted to the individual client terminals. In this case, the server is able to transmit the synthesized voice data signals not only to client terminals participating in a conference but also to client terminals of listeners of a conference present on a network. In this case, the listeners mean those who only listen to a conference call and do not speak.

The synthesized voice data signal in the above described conference call is retained in a server computer as a file without any modification and transmitted to a client terminal, for example, as a streaming data file whenever necessary.

However, a conventional conference call system is not sufficient as a mechanism which allows many listeners to listen to the details of a conference call. There is also no sufficient mechanismwhich allows listeners to find out details of an interesting conference call. As described above, conventional text-based social media are limited in the ability thereof. Under these circumstances, there is strongly demanded a social media system which is capable of fully making use of the ability that voices have.

In a certain discussion program etc., that is, a popular TV program in which panelists have discussions from late at night to early in the morning, the panelists sit at a round table etc., commenting freely depending on subject themes. And, there is appointed a person who is not a presenter directing the progress of the subject themes but rather acts as an organizer who persuades the panelists into making comments, thereby fostering the discussions. Then, there are listeners who listen to the discussion details seated as the audience outside the table of discussion. In the above described discussion program, there is provided such a pattern that while the panelists freely make comments about subj ect themes for discussion, listeners (first listeners) on-site and TV viewers (second listeners) viewing via a TV screen listen to the details of their comments to share information. Although the panelists make gestures, they essentially only speak while being seated. There are also case where some slides are used but they are not needed inmost cases. The listeners (first listeners) on-site and the TV viewers (second listeners) are interested in details of comments made by the panelists.

In the future, opportunities for conference calls for discussing various subject themes via the Internet (including debates, meetings between fans, language education, one-on-one open talk or open talk among a plurality of participants, and one-on-one secret talks or secret talks among a plurality of participants) are expected to increase further. It is also expected that such opportunities will further increase in which their own opinions are expressed in their own voices about various problems and subject themes on the Internet (various types of seminars, lectures, messages from artists to fans, and comic story telling). And, there is demand for improving the environment that a larger number of listeners will be given opportunities for listening to individual conference calls.

[Patent Document 1] JPA-2007-507190
[Patent Document 2] JPA-2005-269347
[Patent Document 3] JPA-2010-093479

### [Outline of the Invention]

### [Problems to be Solved by the Invention]

In view of the above described circumstances, an object of the present invention is to provide a social network service system which specializes in voice and in which participants are able to enjoy conversations on a web space.

### [Means to Solve the Objects]

In order to attain the above described object, the voice link system of the present invention is a system in which a plurality of client terminals are connected to at least one server via a network, the client terminal is provided with a room selection unit which selects a virtual room, a voice data receiving unit which receives voice data associated with the selected virtual room, and a voice data output unit which outputs the voice data.

Further, where the client terminal is a speaker terminal, the speaker terminal is additionally provided with a voice data transmitting unit which transmits picked-up voices to the server as voice data.

Furthermore, the server is provided with a room attribute storing unit which stores attribute information on the virtual room, a voice data receiving unit which receives the voice data from the speaker terminal, and a voice data delivery unit which sorts the voice data received from the speaker terminal via the network into each virtual room and transmits the voice data of the same virtual room to a client terminal which selects the virtual room concerned.

The voice link system of the present invention is, as its name indicates, a system which is able to link (connect) voices (sound). In the voice link systemof the present invention, a virtual room which is called "room" is established on the server which delivers voice data received from a client terminal via a network. Here, the room is used not only as a conference room where a plurality of participants have discussions but also includes a seminar room where a lecture is given by one person. The conference call includes not only discussions and preliminary meetings but also lectures and ordinary conversations.

In the voice link system of the present invention, a plurality of client terminals are connected to at least one server via a network. The client terminals are roughly classified into a listener terminal as a listener who does not speak and a speaker terminal who is able to speak in a room. Where the client terminal is a listener, this terminal is provided at least with a unit (room selection unit) which displays a list of virtual rooms on the server to select a virtual room on the server, a unit (voice data receiving unit) which receives voice data associated with the virtual room on the server, and a unit (voice output unit) which outputs the voice data.

Here, the client terminal is a computer such as a mobile computer, a cellular phone and a PC (personal computer) capable of being connected to a network which transfers a packet via the Internet Protocol. In the case of a lecture and a speech addressed to a plurality of listeners by a single speaker, one speaker terminal is available. However, in an ordinary conference call, N (two or more) of speaker terminals are available. Further, the client terminal as a listener will be available from one unit to countless units (depending on restrictions on server resources).

Further, the above described display of the room is to list information on a virtual room, that is, information on conferences and lectures, for example, a subj ect theme of a conference, conference starting time, information on participants of a conference, the number of participants of a conference and the number of monitors (the number of listeners) etc., thereby displaying the information on a browser screen of the client terminal.

Still further, the room selection unit is to select the information on a displayed list of virtual rooms, for example, a room number and a room name etc., by clicking a mouse or operating a touch panel.

In addition, the voice data receiving unit is to receive voice data delivered from the server as streaming data via a network such as the Internet. Here, the delivered voice data is such that the voice data which has been transmitted from individual speaker terminals in a room is delivered without modification but as it is to all client terminals which select the same room. It is also acceptable that voice-synthesized data obtained by synthesizing by the server the voice data transmitted from individual speaker terminals of the room is delivered to all the client terminals which select the same room.

The voice output unit is a computer speaker or an earphone built into a client terminal or externally installed thereon.

In the voice link system of the present invention, where the client terminal is a room owner terminal which generates a virtual room, the room owner terminal is provided with a room registration unit which transmits attribute information on the virtual room to the server and registers the information, a voice data transmitting unit which transmits picked-up voices to the server as voice data, and a terminal attribute switching unit which changes the client terminal as a listener to a speaker terminal or switches the speaker terminal to the listener terminal.

The room owner terminal is a manager of a room and able to perform generation of the room, registration of attribute information with the room and deletion of the room. The room owner terminal is able to speak, as with the speaker terminal, and transmits voice data to the server. The room owner terminal is able to change the client terminal as a listener to a speaker terminal or switch the speaker terminal to the listener terminal and acts as a presenter who allows a conference to proceed.

A user who desires to be a room owner generates a room and the user who has generated the room logs in the thus generated room, by which the user is to automatically act as a room owner terminal.

There is also found a case that in place of the room owner terminal, the server automatically generates a room, thus resulting in the absence of the room owner terminal.

Further, in the voice link system of the present invention, the client terminal is additionally provided with an evaluation data input unit which inputs evaluation data for the voice data, an evaluation data transmitting unit which transmits the thus input evaluation data to the server, and a display unit which displays a count value of the evaluation data in a virtual room. The server is additionally provided with a room evaluation count delivery unit which counts the number of evaluation data for each virtual room and transmits the count value of the evaluation data for each virtual room to the client terminal.

Still further, in the voice link system of the present invention, the client terminal is additionally provided with a display unit which displays time transition information on the evaluation data in the virtual room, and the server is additionally provided with a room evaluation time transition information delivery unit which transmits to the client terminal the time transition information on the evaluation data retained according to a time line of voice data for each virtual room.

Here, the evaluation data input unit is, for example, an evaluation button which is displayed on the screen of the client terminal. Pressing of the button makes it possible to transmit the evaluation data to the server via a network at every predetermined interval. Where listeners or speakers are sympathetic or in agreement with details of a conversation depending on progress of a conference call, the client terminal is to press the evaluation button. The evaluation button is given any designation which can be freely set, for example, "good," "like," "satisfied," "interested," or "found interesting." More specifically, it is possible to use any one of the expressions including, for example, "bad," "nice," "scared," "thrilling," "dislike," "becoming," "not becoming," "enjoyable," "skillful," "poor," "impressed," "want," "do not want," "agree," or "disagree." It is acceptable that any designation is appropriately selected depending on details of a conference call.

It is also acceptable that the higher the evaluation level is, the more often the evaluation button is pressed. It is acceptable that, for example, the button is pressed twice or more to input evaluation data in a predetermined period of time, by which the evaluation data higher in evaluation level is input. It is acceptable that where the evaluation data is input, for example, only once for every 15 seconds, the evaluation data is input frequently, (for example, the button is pressed many times), thereby the number of times that the data has been input is counted on the side of the client terminal and data capable of distinguishing an evaluation level is transmitted to the server. Further, it is also acceptable that a selection button for distinguishing a magnitude of the evaluation level such as "very good" or "only slightly good" is installed.

Still further, the evaluation data transmitting unit is to transmit the input evaluation data to the server. And, the virtual room selecting information is, for example, a unique identification number of a virtual room selected from the list.

Here, the room information includes a room name, a room owner, details of a room and a room start time. User information is registered with a room owner and a speaker. The user information includes, name, age, sex, occupation, hobby, date of birth, animal symbol from the Chinese zodiac, blood type, marital history, family members, birth place, age of child, anxieties, worries, dreams of the future and evaluation data in the past. The user information registration unit is to input from the screen of the client terminal content information which covers name, age, sex, occupation, hobby, date of birth, animal symbol from the Chinese zodiac, blood type, marital history, familymembers, birth place, age of child, anxieties, worries, dreams of the future, and evaluation data in the past.

Further, the voice data transmitting unit is to make the voice data available as a data packet and transmit the data to the server.

Next, a description will be given of the server of the voice link system in the present invention.

The server is provided with a unit (room attribute storing unit) which stores attribute information on the virtual room, a unit (voice data receiving unit) which receives the voice data from a speaker terminal, and a unit (voice data delivery unit) which sorts the voice data from a client terminal via a network into each virtual room and transmits the voice data of the same virtual room as the voice data to the client terminal which selects the virtual room concerned.

The room attribute storing unit is to store, for example, attribute information on the virtual room (such as category of virtual room, keyword or description expressing details of the virtual room, maximum number of people capable of participating in the virtual room) as a database of a hard disk or a table on a memory.

Here, the attribute information on the virtual room is owner information on the virtual room, language, category of virtual room, keyword or description expressing details of the virtual room, a maximum number of people capable of participating in the virtual room, a state of being open or closed to the public, and status information on live performance or recorded state.

The owner information on the virtual room is user information on a client terminal which generates a virtual room on the server.

Further, to sort the voice data received from the client terminal into each virtual room is such that since an identification number of a virtual room now in the process of being selected from a client terminal is transmitted together with the voice data or transmitted at the beginning, the voice data is associated with a virtual room in the process of being selected based on the identification number.

Further, the voice data delivery unit is used to transmit, as streaming data, the voice data associated with a virtual room based on the selection information on the received virtual room to all the client terminals which select the virtual room concerned.

In the voice link system of the present invention, the listener terminal is not always required to register the user information with the server. Since the user information is not necessarily registered with the server, the listener terminal only selects a room, as if a radio station were selected by using a tuner, thus making it possible to listen to a conference call like listening to the radio.

However, the listener terminal registers the user information with the server, thus making it possible to associate the user information with the evaluation data. The listener terminal registers the user information, by which the user information can be linked with the input evaluation data to add an attribute to the evaluation data. Thus, the evaluation data can be increased in use value.

In the voice link system, where the user information has been registered and a listener desires to make comments, there is provided a participation announcement input unit which is able to participate in a room as a speaker terminal. And, where participation announcement is transmitted to the server, the server is provided with a participation approval unit which transmits the user information on the participation announcement and makes an inquiry about the room owner terminal of the virtual room concerned, and where the room owner terminal of the virtual room gives approval, the client terminal of the listener who has made the participation announcement is changed to the speaker terminal.

Thereby, the listener terminal is able to act as a speaker under certain conditions (for example, only where the room owner gives approval) after registration of the user and announcement of participation.

Further, in the voice link system, the client terminal is additionally provided with a user information registration unit which registers the user information with the server and an icon display unit which displays an icon and user information on the screen of the virtual room of all the client terminals which select the virtual room when the user selects the virtual room and is connected to the server after registration of the user information with the server.

Here, the icon is a small picture displayed on the screen. A pattern of the icon includes a photo and an avatar of the user. The user information is displayed below the icon, that is, in the vicinity thereof or in a state of being overlapped with the icon. The picture of the icon is associated with the user information, by which other users are able to obtain an easy understanding. The user information is information on a name and a site and displayed in a short text of about 20 characters in one or two stages.

Here, where the icon and the user information are displayed on the screen of the virtual room in the client terminal, it is preferable that the icon and the user information on the user who speaks in a virtual room are displayed in a first screen area, while the icon and the user information on the user who only listens in the virtual room are displayed in a second screen area, and the second screen area is displayed as an area which surrounds the first screen area.

This is in agreement with an image that the speaker is surrounded by listeners.

To display the second screen area as an area which surrounds the first screen area is, for example, such that the first screen area is displayed as a circle-shaped area at the center of the screen and the second screen area is displayed as an area of the entire screen which surrounds the circle of the first screen area (area other than the circle).

The server is additionally provided with a terminal total number transmitting unit which transmits to a client terminal connected to the virtual room the total number of client terminals in the process of selecting a virtual room and the total number of client terminals in the process of selecting a virtual room and also having registered the user information. And, the client terminal is additionally provided with a terminal total number display unit which displays the total number of client terminals at least in progress of selecting the virtual room.

How many listeners are present is an important factor in making an evaluation of conversation content in a room. In the voice link system, since the server is able to understand the total number of client terminals in the process of selecting a virtual room, the information is displayed on the screen of the client terminal.

Where the client terminal selects a room, it is acceptable that only the total number of client terminals which select the room is displayed. However, where the number of listeners is added to an attribute of the room on a room selection menu, it is necessary to display the number of listeners in each room.

Further, where an icon of a client terminal in the second screen area is selected on the virtual room screen of the room owner terminal and operation is input for allowing the icon to move to the first screen area, the client terminal to be operated is changed from a listener to a speaker of the virtual room. Where an icon of a client terminal in the first screen area is selected and operation is input for allowing the icon to move to the second screen area, the client terminal to be operated is changed from a speaker of the virtual room to a listener.

The icon of the second screen area is allowed to move to the first screen area on a screen of the virtual room of the room owner terminal, thereby allowing the user of the icon to participate as a speaker. On the other hand, the icon of the first screen area is allowed to move to the second screen area, thereby changing the user of the icon from a speaker to a listener.

Since the room owner is responsible for allowing conversations to proceed, the room owner is authorized to decide who is appointed as a speaker and when such appointment is made.

Further, in the voice link system of the present invention, the server is additionally provided with an evaluation data integration number associating unit in which where an icon is selected to input evaluation data on the screen of the virtual room of the client terminal, the user information on the thus selected icon is associated with an integration number of the evaluation data.

Here, in the evaluation data integration number associating unit, it is preferable that where the number of the evaluation data input from a client terminal without registration of user information is 1, the number of the evaluation data input from a client terminal with registration of user information is given as N (N>1) to carry out weighting.

For example, on the assumption that the weighing of N is 10, the evaluation data received from a client terminal with registration of user information is 10 times greater in value than the evaluation data received from a listener terminal without registration of user information.

Further, in the voice link system of the present invention, voice data picked-up from a microphone of a client terminal participating in a virtual room can be muted by input operation from a client terminal of the owner of the virtual room.

It is preferable that an icon on a screen of a client terminal in the voice link system of the present invention is a real time image from a web camera of the client terminal or an image which has been recorded in advance. This is because discussion can be made in a more realistic situation.

It is also preferable that the server of the voice link system in the present invention changes at least one of the size of icon image, the shape of icon or the color of icon frame corresponding to those of the terminal, upon receipt of the voice data from the room owner terminal or the speaker terminal.

The size of icon image, the shape of icon and the color of icon frame are allowed to change dynamically in accordance with the voice data, by which a listener is able to understand which user makes comments.

In the voice link system of the present invention, it is also preferable that a display unit of level of evaluation data in a client terminal expresses a level of evaluation data by the size of an imaged obj ect and the shape of the imaged obj ect is increased in size, where the evaluation data is input continuously within a predetermined period of time.

The shape of the imaged object is increased in size according to the level of evaluation data, by which a user is able to visually understand the evaluation level.

It is also preferable that the client terminal of the voice link system in the present invention is displayed in such a manner that where an icon is selected to input the evaluation data, an imaged object which expresses the level of the evaluation data is increased in size in a screen display area overlapped with or adjacent to the icon of the client terminal which inputs the evaluation data, the imaged object moves to the thus selected icon, the imaged object is merged by the selected icon and the imaged object disappears.

Thereby, an operator who inputs the evaluation data is able to give the evaluation data to a specific user and also able to visually understand whether or not the evaluation data is given to the specific user.

### [Effects of the Invention]

The voice link system of the present invention is able to establish a new type of social network service system which specializes in voice and in which conversations can be enjoyed on a web space.

Further, as with TV and radio, the voice link system allows an unspecified number of listeners to be involved and delivers conversations to an unlimited number of listeners.

It is possible to visualize the evaluation data of conversations along a time line.

### [Brief Description of the Drawings]

FIG. 1 shows one example of a block diagram which shows a voice link system.
FIG. 2 shows a room screen.
FIG. 3 shows a list of rooms.
FIG. 4 shows an illustration of evaluation data along the time line of voice data.
FIG. 5 shows one example of the room screen.
FIG. 6 shows other example (1) of the room screen.
FIG. 7 shows other example (2) of the room screen.
FIG. 8 shows other example (3) of the room screen.
FIG. 9 shows a room registration window screen (1).
FIG. 10 shows a room registration window screen (2).
FIG. 11 shows a block diagram which shows functions of the voice link system.

### [Best Mode for Carrying Out the Invention]

Embodiments of the present invention will be described in detail below with reference to the drawings. The present invention is not limited to the following embodiment and examples of shown in the figure, and the present invention can be variously changed in design.

### [Embodiment 1]

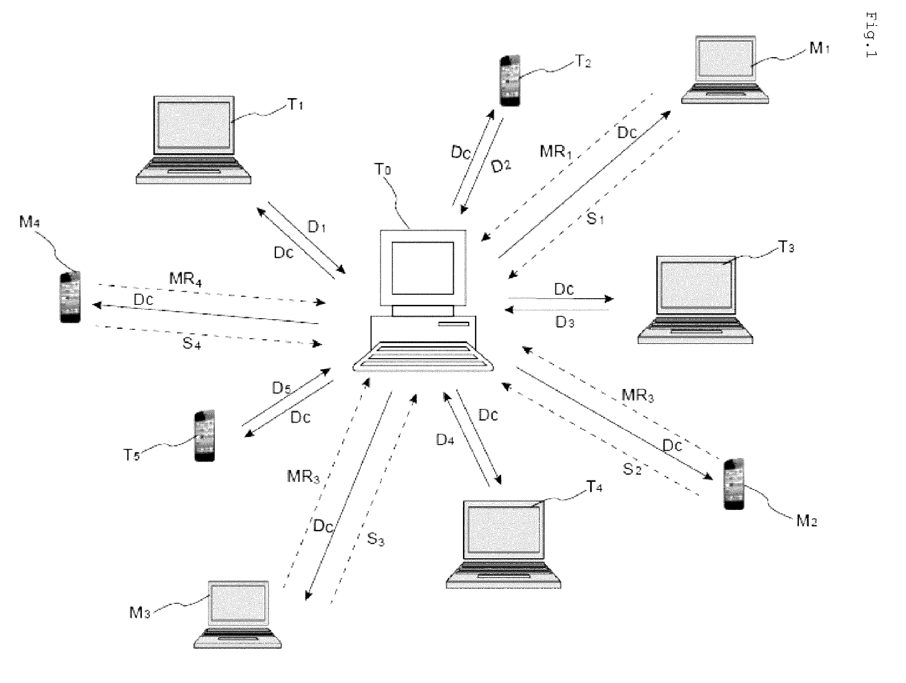

Fig. 1 is a block diagram which shows a voice link system of Example 1. As shown in Fig. 1, the voice link system of Example 1 is arranged so that one server To, five speaker terminals (T₁ to T₅) and four listener terminals (M₁ to M₄) are connected via the Internet. The speaker terminals (T₁ to T₅) participating in conversations to make comments transmit the respective voice data signals (D₁ to D₅) to the server To. Next, the server To synthesizes voice data signals D₁ to D₅ transmitted from the speaker terminals (T₁ to T₅). The thus synthesized voice data signal Dc is transmitted to all the five speaker terminals (T₁ to T₅) and all the four listener terminals (M₁ to M₄).

Here, it is acceptable that the server To does not synthesize the voice data signals D₁ to D₅ transmitted from the speaker terminals (T₁ to T₅) but transmits the voice data signals D₁ to D₅ to all the five speaker terminals (T₁ to T₅) and all the four listener terminals (M₁ to M₄).

The listener terminals (M₁ to M₄) are able to listen to conversations after transmitting the listener requests (MR₁ to MR₄) to the server T₀. Further, the listener terminals (M₁ to M₄) are able to transmit evaluation data (S₁ to S₄) which cover details of conversations.

In the voice link system, the listener terminals (M₁ to M₄) are classified into two types of users, that is, a registered user with registration of user information and an unregistered user without registration of user information. The registered user is a user who has registered with the server the user information (any or all items selected from a group of personal information on the user, for example, name, age, sex, occupation, hobby, date of birth, animal symbol from the Chinese zodiac, blood type, marital history, family members, birthplace, age of child, anxieties, worries, future dreams but not limited thereto, and any useful information as user information may be added thereto). The unregistered user is a user who has not yet registered the user information with the server.

The registered user is different from the unregistered user in that the registered user is eligible as a room owner or a speaker, if so desired. Further, as will be described later, the registered user is able to associate the user information with the evaluation data. It is also acceptable that the registered user is allowed to listen to a specific conversation which the unregistered user would not be allowed to listen to.

Further, Fig. 1 shows a situation in which the speaker terminals (T₁ to T₅) are made available and five speakers of T₁ to T₅ have conversations. Such a case is also acceptable that a lecture, comic story telling and a speech are made by only one speaker.

In the voice link system, a virtual room is established on the server. More specifically, the virtual room is a directory file of the server which is accessible via a network. One of registered users generates the virtual room to be a room owner.

Here, when the virtual room is established on the server, information on the virtual room, that is, information on a conversation, a conference and a lecture, for example, information on a subject theme, a start time and a room owner is registered with the server.

The information on the above described conversations is displayed on a client terminal and displayed on a room list screen. It is acceptable that, for example, the start time of a room which is desired to listen to is to be reserved by using calendar functions of the client terminal and the server. In this case, for example, at a time before the start time of the room which has been reserved (5 minutes before the start, for example), an alarm notice or a message notice is automatically displayed on the client terminal of a user, by which the user is able to listen to a conference call in real time.

Since the voice data on the conversation in the room is transmitted via the server, the data can be recorded on the server (may also be recorded on other computers). The voice data on the conversation in the room is recorded, thus making it possible to play back and listen to the conversation.

In this case, the evaluation data and information on the speakers are also reproduced, by which details of the conversation can be listened to and listeners are also able to know information added to the details of conversation as visualized information.

On the server of the voice link system, voice data received from speaker terminals is sorted for each virtual room and the voice data of the same virtual room is associated with the virtual room and retained. A method for sorting the voice data for each virtual room is such that an identification number of the virtual room in the process of being selected from speaker terminals is transmitted together with the voice data or transmitted at the beginning. Thus, the voice data is associated with the virtual room based on the identification number.

Further, the server delivers, as streaming data, the voice data associated with the virtual room to all the client terminals which have selected the virtual room concerned based on the received information on selection of virtual rooms.

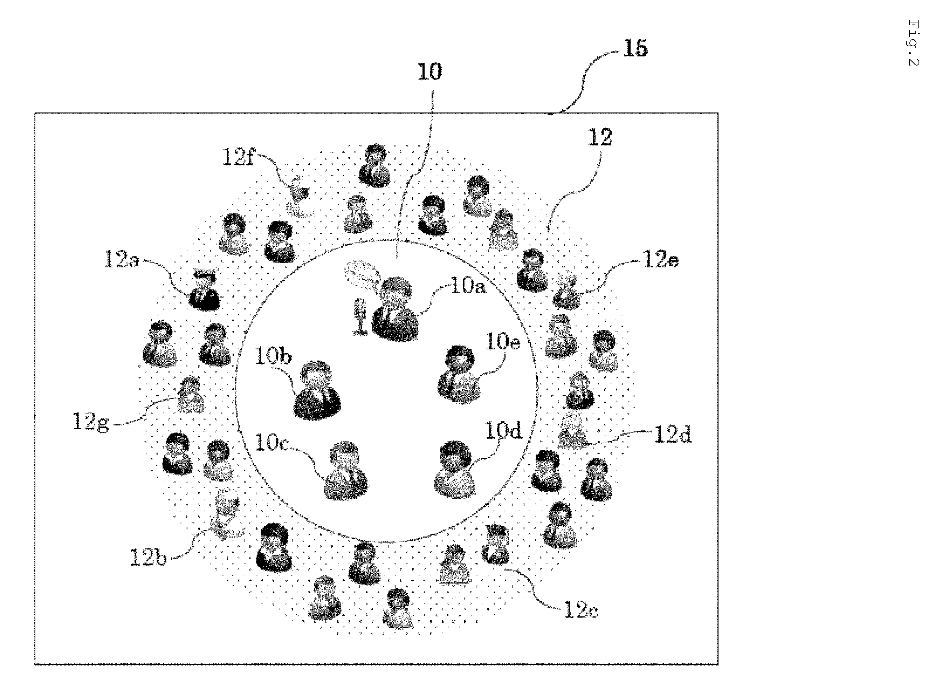

Fig. 2 shows an arrangement of a room screen in the voice link system.

Where a virtual room is selected, an icon image of a speaker is displayed in a first screen area 10 on the room screen of a client terminal and an icon image of a listener is displayed in a second screen area 12. Further, although not illustrated, the number of listeners and a total number of evaluation data which has been input are displayed on the screen. In Fig. 2, the first screen area 10 is formed in a circle shape, and the second screen area 12 occupies an entire screen which surrounds the first screen area 10, to which the present invention shall not be, however, limited. It is acceptable that the first screen area 10 is formed in a polygonal, oval, rectangular, or any other shape. It is also acceptable that the first screen area 10 is not surrounded by the second screen area 12 but the first screen area 10 is spaced away from the second screen area 12.

As shown in Fig. 2, there are displayed icon images 10a to 10e of five speakers (photos and graphic symbols of avatars) corresponding to the speaker terminals (T₁ to T₅) in a circle area of the first screen area 10. The number of images to be displayed will be changed depending on the number of speaker terminals. Further, in the second screen area 12, there are displayed icon images 12a to 12d of listeners (photos and graphic symbols of avatars) corresponding to the listener terminals. In this case, user information is registered with the listeners. Although not illustrated on the screen given in Fig. 2, the number of listeners without registration of user information can be extracted on the side of the server. Therefore, it is acceptable that dots corresponding to the number of unregistered listeners are displayed outside a ring of the second screen area 12.

On a screen of a listener terminal with registration of user information, there is displayed a participation announcement button which announces participation when a listener desires to make comments (the button is omitted in Fig. 2). Where the listener operates the participation announcement button, the user information which has announced participation is transmitted to a room owner terminal of the corresponding virtual room. And, only when the room owner gives approval, a listener who has announced participation is allowed to participate in the virtual room. An icon displayed in the second screen area 12 is allowed to move to the first screen area 10 as a speaker and displayed.

Further, on the screen of the client terminal of the room owner of the virtual room, an icon of the second screen area 12 is selected and where such operation is input that the icon is allowed to move to the first screen area 10 by dragging a mouse or using a touch panel, a listener to be operated is changed to a speaker. In contrast, where such operation is performed that an icon of the first screen area 10 is selected and allowed to move to the second screen area 12, a speaker to be operated is changed to a listener.

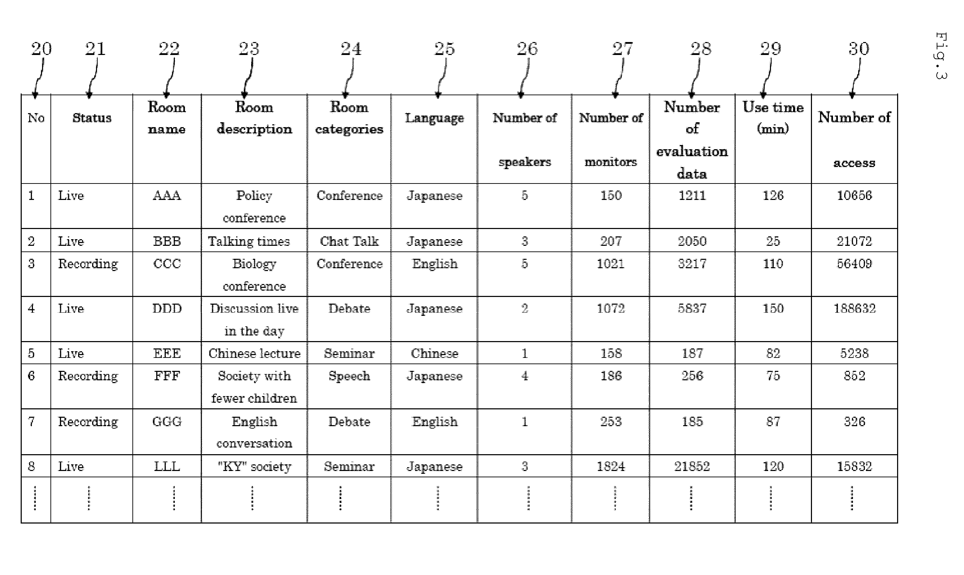

Fig. 3 is a list of rooms. The virtual room is available in a state of live performance that conversations are in progress and in a state that conversations have been already completed and available as a recorded medium. In the list of rooms, in addition to a status of each room (live/recorded), there are displayed room name 22, room description 23, room categories 24, language 25, number of speakers 26, number of monitors 27, number of evaluation data 28, use time 29, and number of access 30. It is acceptable that besides the above description, there is added information helpful in distinguishing a room such as the name of a room owner.

In the room category 24, there are displayed categories of details of a conference call such as conference, conversation, debate, seminar and speech. In the language 25, there are displayed languages spoken in the conference call such as Japanese, English, Chinese and Korean. In the number of speakers 26, there is displayed the number of speaker terminals. In the number of monitors 27, there is displayed the number of listener terminals. The number of speakers and the number of monitors are counted in real time by the server and the count values thereof are transmitted to client terminals. In the number of evaluation data 28, there is displayed a total number of input evaluation data which has been received from the client terminals by the server. In the use time 29, there is displayed passage time from the start of a conversation, and where the conversation has been already completed, there is displayed time from the start to the completion. Further, in the number of access 30, there is displayed a total sum of the number of client terminals which have had access to the room.

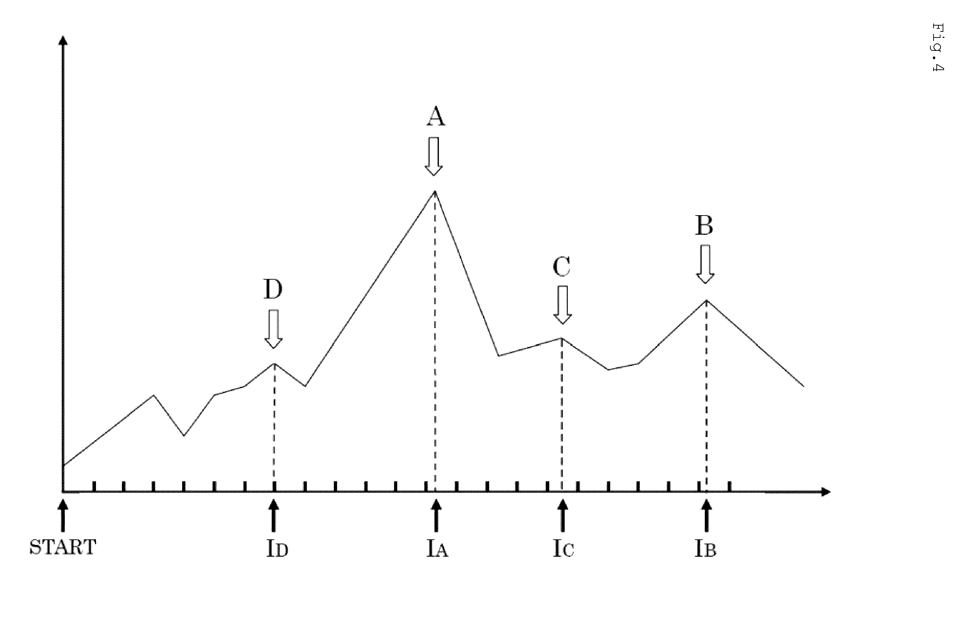

As shown in Fig. 4, with regard to voice data of conversation in a virtual room, it is assumed that there is a distribution of the number of counts of evaluation data along a time line from the start of the room. Peaks of the evaluation data are to be found at four sites of 1 to 4 and are to be at the respective time points of I_{A}, I_{B}, I_{C}, I_{D} from the start of the voice data. Participating listeners are able to understand the evaluation level of details of a conversation based on the number of the evaluation data along the time line.

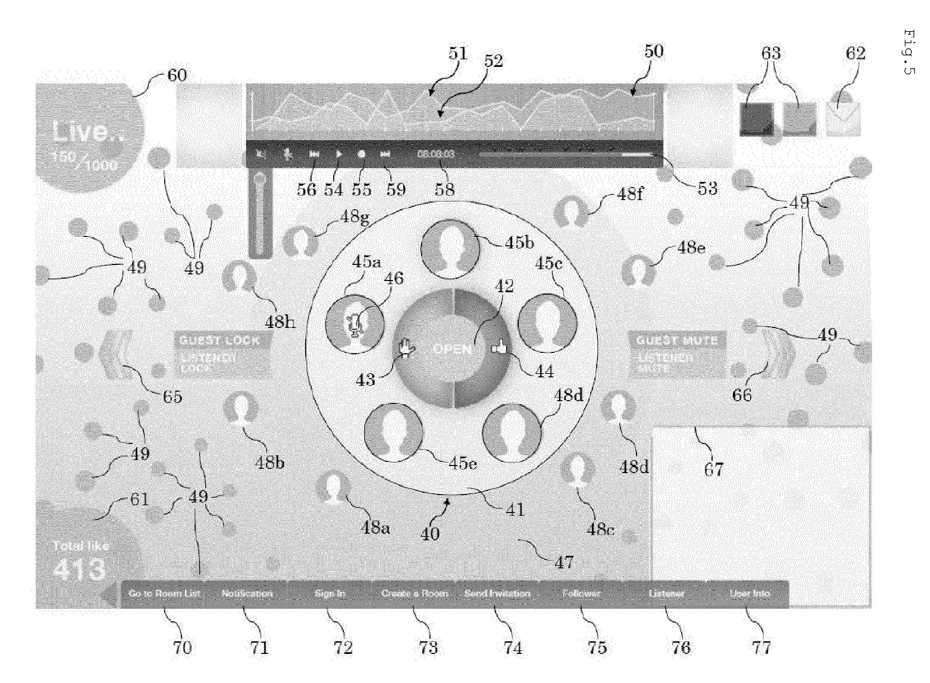

Fig. 5 shows one example of the room screen. Hereinafter, individual display parts will be described with reference to Fig. 5. In Fig. 5, a reference numeral 41 represents the above described first image area in which avatars of five speakers or photos 45a to 45e are displayed. The second screen area is outside a border line 40 which is an outer circumference of the first screen area 41. Avatars of users of client terminals with registration of user information or photos 48a to 48f are displayed in the second screen area. Further, a circle 49 represents each of images of unregistered users without registration of the user information. The number of listeners is indicated by the number and size of the circles 49. A reference numeral 50 represents an area in which the number of input evaluation data is displayed by a line graph along a time line of conversation. A reference numeral 51 represents time transition in terms of the number of input evaluation data, and a reference numeral 52 represents time transition in terms of the number of listeners. A reference numeral 53 represents a bar graph which displays the use time of a virtual room. Where total time is available, for example, in such cases that the use time of a virtual room is set to be a maximum of 180 minutes and that a conference call has been already recorded, it is possible to understand visually time of conversation used up to now and remaining time of the conversation. With regard to the recorded conversation data, a reference numeral 54 represents a start button; 55, a stop button; 56, return button; 58, indication of passed time; 59, a fast-forward button. Further, a reference numeral 60 represents whether live data or recorded data and is able to display the number of monitors. A reference numeral 61 is a total number of evaluation data. A reference numeral 62 is an activation button of e-mail, and a reference numeral 63 represents an activation button of other social net applications. A uniform resource locator (URL) of a room can be used to work with e-mail and social net applications. A reference numeral 65 is a button moving to a room at the beginning of the list, a reference numeral 66 is a button moving to a room at the end of the list. A reference numeral 67 is a text-entry area or an area at which an image can be displayed. Reference numerals 70 to 77 are respectively a button moving to a room list screen, notification, sign entry, room generation, screen for inviting other users, follow-up screen, screen for displaying listener information, and button of registration of user information/display screen.

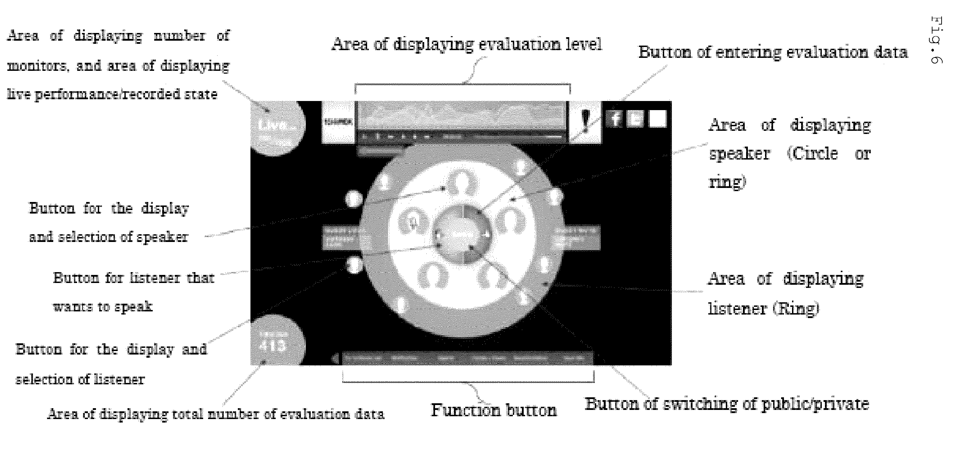

Fig. 6 to Fig. 8 show other examples of room screens.

Fig. 6 is a drawing in which a background of Fig. 5 is exchanged. The background of the room screen can be set freely when a room owner generates the room.

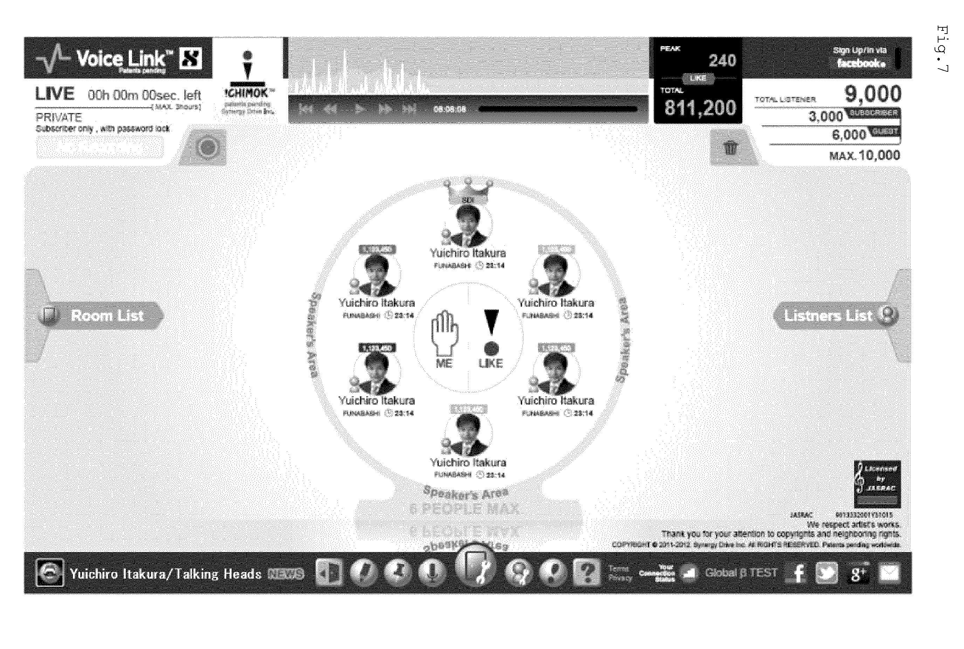

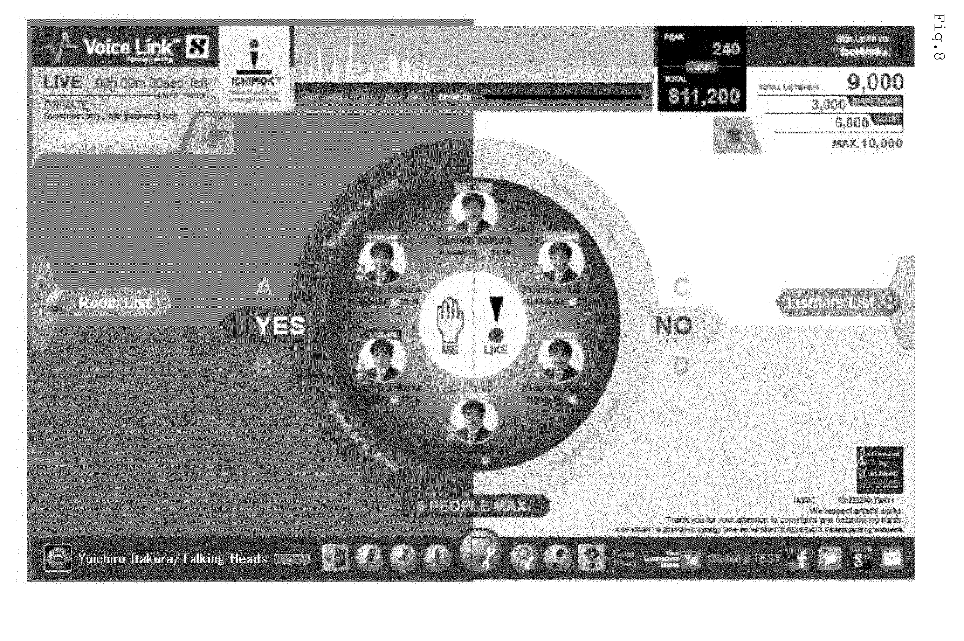

Further, in the room screens shown in Fig. 7 and Fig. 8, the room screen given in Fig. 5 and parts which constitute the screen are partially changed. In the room screens shown in Fig. 7 and Fig. 8, a function button below the screen is made available as an icon, and an area of displaying the number of monitors is disposed not on the upper left of the screen but on the upper right of the screen. Still further, in the room screen shown in Fig. 7 or Fig. 8, a "Room List" on the left of the screen is selected by the room list to display a room list window from the left of the screen. A "Listener List" on the right of the screen is selected by the room list to display a listener list window which shows user information and icons present in the room of a registered user.

Further, the room screen shown in Fig. 8 is divided into a left-half screen which shows a "Yes" area and a right-half screen which shows a "No" area. Thereby, for example, a listener who is indicated as an icon is able to sort details of a conversation into agreement (Yes) or opposition (No) by allowing the icon to move. Since position information on the icon can be understood by the server, the server is able to calculate the number of listeners of agreement (Yes) and the number of listeners of opposition (No). It is possible to display on the screen calculation results covering the number of listeners of agreement (Yes) and the number of listeners of opposition (No) through delivery to client terminals.

Still further, on the room screen shown in Fig. 8, the screen is divided into four areas (area A to area D). Thereby, four options including agreement (Yes) and opposition (No) are provided, thereby allowing an icon to move to individually divided four areas (area A to area D) to sort the details of a conversation.

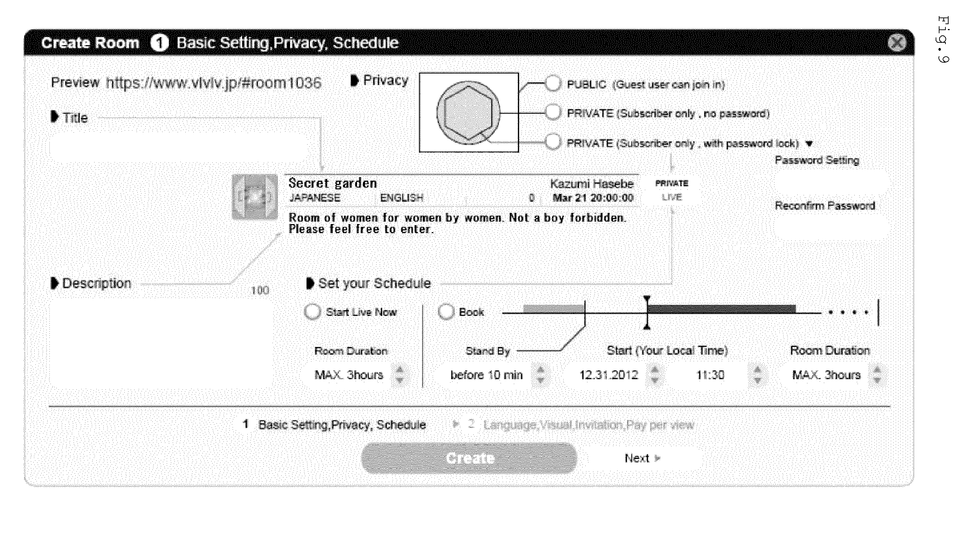

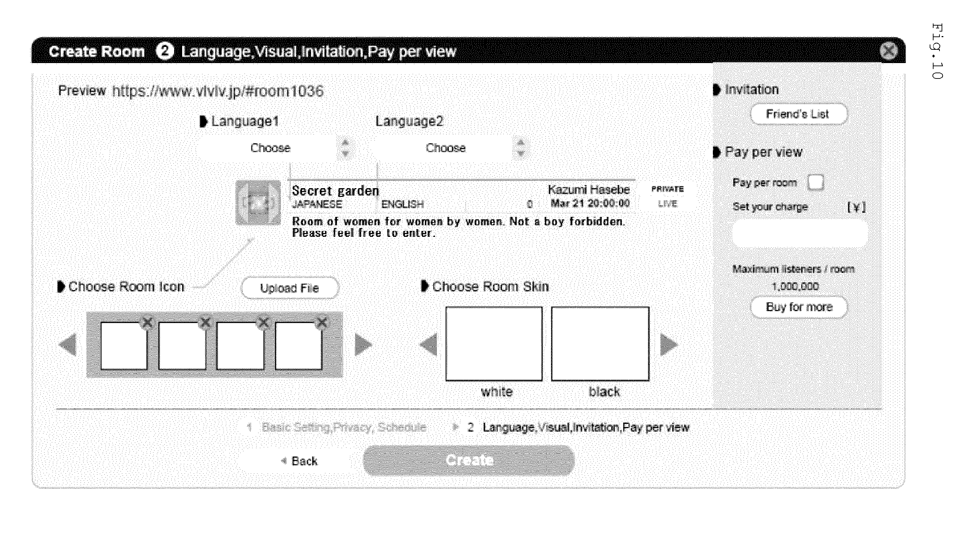

Further, Fig. 9 and Fig. 10 show one example of a room registration window. Upon generation of a room, necessary information is set on the room registration window.

For example, information on privacy is set in such a manner that whether the room is opened or closed to the public (only a specific user is allowed to listen). More specifically, a password is input upon selection of the room.

Still further, there are set a room name (Title), a room description (Description) and a room start time (Set your Schedule). In addition, as shown in Fig. 10, there are set a language used in the room, a background of the room (Room Skin) and a room icon (Room Icon).

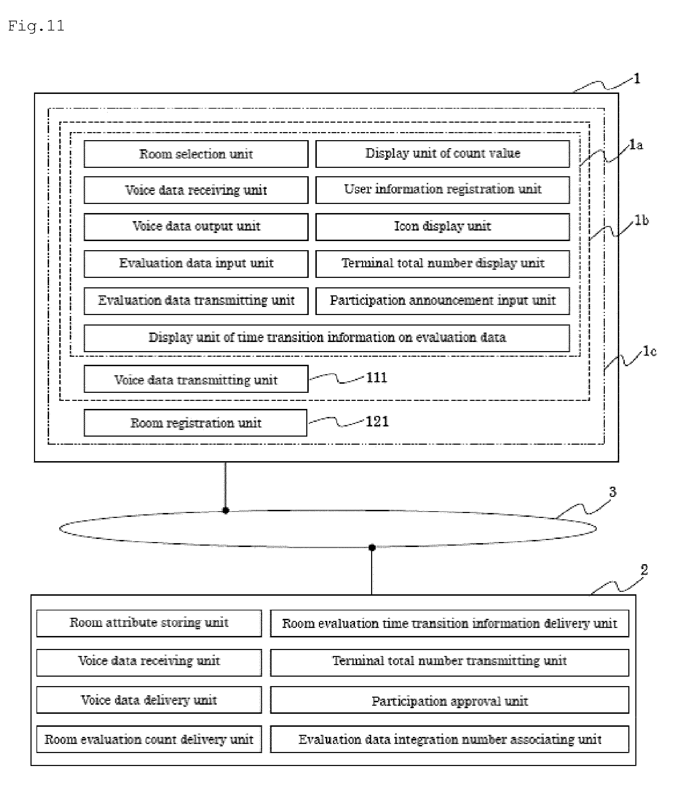

Fig. 11 is a block diagram which shows functions of the voice link system.

The client terminal 1 is connected to the server 2 via the network 3. The client terminal 1 is provided with a room selection unit, a voice data receiving unit, a voice data output unit, an evaluation data input unit, an evaluation data transmitting unit, a display unit of count value, a display unit of time transition information on evaluation data, a user information registration unit, an icon display unit, a terminal total number display unit, a participation announcement input unit, a voice data transmitting unit, and a room registration unit.

Of these units, the voice data transmitting unit and the room registration unit are not installed on a listener terminal 1a.

A speaker terminal 1b is provided with a voice data transmitting unit besides functions of the listener terminal 1a. Further, a room owner terminal 1c is provided with a room registration unit besides functions of the speaker terminal 1b.

Further, the server 2 is provided with a room attribute storing unit, a voice data receiving unit, a voice data delivery unit, a room evaluation count delivery unit, a room evaluation time transition information delivery unit, a terminal total number transmitting unit, a participation approval unit, and an evaluation data integration number associating unit.

### [Industrial Applicability]

The present invention is useful as a voice-based social network system by making use of the Internet.

### [Description of Symbols]

- 1: Client terminal
- 1a: Listener terminal
- 1b: Speaker terminal
- 1c: Room owner terminal
- 2: Server
- 3: Network
- To: Server
- T₁-T₅: Speaker terminal
- M₁-M₄: Listener terminal
- D₁-D₅, D_{c}: Voice data signal
- S₁-S₄: Evaluation data

## Claims

1. A voice link system in which a plurality of client terminals are connected to at least one server via a network, wherein
1) the client terminal comprises:
a room selection unit which selects a virtual room;
a voice data receiving unit which receives voice data associated with the thus selected virtual room; and
a voice data output unit which outputs the voice data; and
where the client terminal is a speaker terminal, the speaker terminal additionally comprises a voice data transmitting unit which transmits picked-up voices to the server as the voice data, and 2) the server comprises:
a room attribute storing unit which stores attribute information on the virtual room;
a voice data receiving unit which receives the voice data from the speaker terminal; and
a voice data delivery unit which sorts the voice data received from the speaker terminal via the network into each virtual room and transmits the voice data of the same virtual room to a client terminal which selects the virtual room concerned.

2. The voice link system according to Claim 1, wherein
where the client terminal is a room owner terminal which generates a virtual room,
the room owner terminal comprises:
a room registration unit which transmits attribute information on the virtual room to the server and registers the attribute information;
a voice data transmitting unit which transmits the picked-up voices as voice data to the server; and
a terminal attribute switching unit which changes the client terminal to a speaker terminal or switches the speaker terminal to a listener terminal.

3. The voice link system according to Claim 1 or Claim 2, wherein the client terminal additionally comprises:
an evaluation data input unit which inputs evaluation data of the voice data;
an evaluation data transmitting unit which transmits the thus input evaluation data to the server; and
a display unit which displays a count value of the evaluation data in a virtual room;
and
the server additionally comprises:
a room evaluation count delivery unit which counts the number of evaluation data for each virtual room and transmits the count value of the evaluation data for each virtual room to the client terminal.

4. The voice link system according to Claim 3, wherein
the client terminal additionally comprises:
a display unit which displays time transition information on the evaluation data in the virtual room; and
the server additionally comprises:
a room evaluation time transition information delivery unit which transmits to the client terminal time transition information on the evaluation data retained along a time line of the voice data for each virtual room.

5. The voice link system according to any one of Claim 1 to Claim 4, wherein
the client terminal additionally comprises:
a user information registration unit which registers user information with the server; and
an icon display unit which displays an icon and the user information on virtual room screens of all the client terminals which select the virtual room, when the user selects the virtual room and connects the room with the server after registration of the user information with the server.

6. The voice link system according to Claim 5, wherein
where the icon and the user information are displayed on the virtual room screen of the client terminal,
the icon and the user information on a user who speaks in the virtual room are displayed in a first screen area,
the icon and the user information on a user who only listens in the virtual room are displayed in a second screen area, and
the second screen area is displayed as an area which surrounds the first screen area.

7. The voice link system according to Claim 6, wherein
the server additionally comprises:
a terminal total number transmitting unit which transmits to a client terminal connected to the virtual room a total number of client terminals which are in the process of selecting the virtual room and a total number of client terminals which are in the process of selecting the virtual room and also have registered the user information, and
the client terminal additionally comprises:
a terminal total number display unit which displays a total number of client terminals which are in the process of selecting at least the virtual room.

8. The voice link system according to Claim 6, wherein
where on a virtual room screen of the room owner terminal, an icon of a client terminal in the second screen area is selected to input operation for allowing the icon to move to the first screen area, and the client terminal to be operated is changed from a listener to a speaker in the virtual room,
and
where an icon of a client terminal in the first screen area is selected to input operation for allowing the icon to move to the second screen area, the client terminal to be operated is changed from the speaker to the listener in the virtual room.

9. The voice link system according to Claim 2, wherein
the client terminal comprises a participation announcement input unit which is able to participate in a room as a speaker terminal if a listener desires to make comments, where the user information has been registered, and
the participation announcement input unit transmits participation announcements to the server,
the server comprises a participation approval unit which transmits user information who made the participation announcement to the room owner terminal of the virtual room concerned to make inquiries for the user information and changes the client terminal of the participation-announced listener to a speaker terminal, where the room owner terminal of the virtual room gives approval.

10. The voice link system according to Claim 5, wherein
the server additionally comprises an evaluation data integration number associating unit in which where an icon is selected to input evaluation data on the virtual room screen of the client terminal, the user information on the selected icon is associated with an integration number of the evaluation data.

11. The voice link system according to Claim 10, wherein
in the evaluation data integration number associating unit, where the number of evaluation data input from a client terminal without registration of user information is 1, the number of evaluation data input from a client terminal with registration of user information is given as N (N>1) to carry out weighting.

12. The voice link system according to Claim 10 or Claim 11, wherein in the evaluation data input unit of the client terminal, a unit for inputting an evaluation level is used or
the evaluation data is input at least two times in a predetermined period of time, thus making it possible to input the evaluation data greater in evaluation level.

13. The voice link system according to Claim 1, wherein
in the room attribute storing unit,
the attribute information on the virtual room includes any one or all of those that are selected from owner information on the virtual room, language, category of the virtual room, keyword and description for expressing details of the virtual room, maximum number of people capable of participating in virtual room, first status information on being open or closed to the public, and second status information on live performance/recorded state.

14. The voice link system according to Claim 1, wherein
in the room selection unit,
a listing of virtual rooms to be selected displays any one or all of those that are selected from room owner information on virtual room, language, category of virtual room, keyword of expressing details of the virtual room, number of people participating in virtual room, number of monitors, a state of being open or closed to the public, and live performance or recorded state.

15. The voice link system according to Claim 2, wherein
voice data picked up from a speaker terminal of the virtual room can be muted by input operation from a room owner terminal of the virtual room.

16. The voice link system according to Claim 5, wherein
the icon is a real-time image from a web camera of the client terminal or an image which has been recorded in advance.

17. The voice link system according to Claim 5, wherein
upon receipt of voice data from a room owner terminal or a speaker terminal, the server changes at least one of the size of icon image, the shape of icon or the color of icon frame corresponding to those of the terminal.

18. The voice link system according to Claim 5, wherein
a display unit of level of evaluation data in the client terminal expresses a level of the evaluation data by a size of an imaged object, and
where the evaluation data is input continuously within a predetermined period of time, the shape of the imaged object is increased in size.

19. The voice link system according to Claim 5, wherein
the client terminal is displayed in such a manner that where an icon is selected to input the evaluation data, an imaged object which expresses the level of the evaluation data is increased in size in a screen display area overlapped on or adjacent to the icon of the client terminal which inputs the evaluation data, the imaged object moves to the thus selected icon, the imaged object is merged by the selected icon, and the imaged object disappears.

20. A voice link system in which a plurality of client terminals are connected to at least one server via a network, wherein
1) where the client terminal is a listener terminal,
the listener terminal comprises:
a unit which registers user information with the server;
a room selection unit which selects a virtual room on the server;
a streaming data receiving unit which receives streaming data associated with the virtual room on the server;
a voice output unit which outputs voices of the streaming data;
an evaluation data input unit which inputs the evaluation data to the streaming data at any given timing; and
an information data transmission unit which transmits to the server selected information on the virtual room and the input evaluation data;
2) where the client terminal is a speaker terminal, in addition to the above described units of the listener terminal, the speaker terminal additionally comprises:
a microphone unit; and
a voice data transmitting unit which transmits to the server voice data picked up from the microphone unit;
3) where the client terminal is a room owner terminal, in addition to the above described units of the speaker terminal, the room owner terminal additionally comprises:
a room registration unit which registers with the server information on the virtual room on the server; and
a terminal attribute switching unit which changes the listener terminal to the speaker terminal or switches the speaker terminal to the listener terminal;
4) the server comprises:
a room attribute storing unit which stores attribute information on the virtual room;
a voice data receiving unit which receives the voice data from the speaker terminal; and
a streaming data transmitting unit which sorts the voice data received from the client terminal via the network into each virtual room and transmits the voice data of the same virtual room to all the client terminals which select the virtual room concerned as streaming data;
the voice link system, wherein
when the user selects the virtual room and is connected to the server after registration of user information with the server, an icon and the user information are displayed on all the virtual room screens of the client terminals which select the virtual room,
the icon of the user and the user information on the speaker terminal and the room owner terminal in the virtual room are displayed in a first screen area,
the icon of the user and the user information on the listener terminal in the virtual room are displayed in a second screen area, and
the second screen area is displayed as an area which surrounds the first screen area.
